# EUROPÄISCHE PATENTANMELDUNG

(11) **EP 2 611 010 A1**
(43) Veröffentlichungstag der Anmeldung: **03.07.2013**
(21) Anmeldenummer: 11196195.9
(22) Anmeldetag: 30.12.2011
(51) Int. Cl.: H02K 21/20

(54) **Elektrische Maschine mit Flussführung axial/radial**

(71) Anmelder: Siemens Aktiengesellschaft, 80333 München (DE)
(72) Erfinder: Vollmer, Rolf, 36129 Gersfeld (DE)

(57) **Zusammenfassung**

Eine elektrische Maschine weist einen Stator (1) und einen Rotor (2) auf. Der Rotor (2) ist in Lagern (3) gelagert, so dass er um eine Rotationsachse (4) rotierbar ist. Der Stator (1) und der Rotor (2) wirken über einen ersten Luftspalt (5) und eine Anzahl zweiter Luftspalte (6) elektromagnetisch aufeinander ein. Der erste Luftspalt (5) und die zweiten Luftspalte (6) erstrecken sich tangential um die Rotationsachse (4) herum. Im Stator (1) ist ein Wicklungssystem (8) angeordnet, im Rotor (2) ein Magnetfeldgenerator (2'). Das Wicklungssystem (8) und der Magnetfeldgenerator (2') generieren zusammen ein resultierendes Magnetfeld (B). Das resultierende Magnetfeld (B) bildet geschlossene Feldlinien (10) aus. Die Feldlinien (10) sind entweder im ersten Luftspalt (5) vom Stator (1) zum Rotor (2) und in den zweiten Luftspalten (6) vom Rotor (2) zum Stator (1) gerichtet oder umgekehrt im ersten Luftspalt (5) vom Rotor (2) zum Stator (1) und in den zweiten Luftspalten (6) vom Stator (1) zum Rotor (2) gerichtet. Die Feldlinien (10) verlaufen innerhalb des Stators (1) und innerhalb des Rotors (2) axial und radial zur Rotationsachse (4), aber nicht tangential um die Rotationsachse (4) herum vom ersten Luftspalt (5) zu den zweiten Luftspalten (6) und umgekehrt.

## Beschreibung

Die vorliegende Erfindung betrifft eine elektrische Maschine,
- wobei die elektrische Maschine einen Stator und einen Rotor aufweist,
- wobei der Rotor in Lagern gelagert ist, so dass er um eine Rotationsachse rotierbar ist,
- wobei der Stator und der Rotor über einen ersten Luftspalt und eine Anzahl zweiter Luftspalte elektromagnetisch aufeinander einwirken,
- wobei der erste Luftspalt und die zweiten Luftspalte sich tangential um die Rotationsachse herum erstrecken,
- wobei im Stator ein Wicklungssystem angeordnet ist und im Rotor ein Magnetfeldgenerator angeordnet ist,
- wobei das Wicklungssystem und der Magnetfeldgenerator zusammen ein resultierendes Magnetfeld generieren,
- wobei das resultierende Magnetfeld geschlossene Feldlinien ausbildet,
- wobei die Feldlinien entweder im ersten Luftspalt vom Stator zum Rotor und in den zweiten Luftspalten vom Rotor zum Stator gerichtet sind oder umgekehrt im ersten Luftspalt vom Rotor zum Stator und in den zweiten Luftspalten vom Stator zum Rotor gerichtet sind.

Elektrische Maschinen existieren in verschiedenen Ausgestaltungen, insbesondere in Form von Radialflussmaschinen, Axialflussmaschinen und Transversalflussmaschinen.

Bei einer Radialflussmaschine ist nur ein einziger Luftspalt vorhanden. Der Luftspalt erstreckt sich in Axialrichtung. Die Feldlinien des Magnetfeldes sind in einem ersten Tangentialbereich des Luftspalts vom Rotor zum Stator gerichtet. In einem zweiten Tangentialbereich der Luftspalte ist es umgekehrt. In der Regel ist der Rotor radial außen vom Stator umgeben. In Einzelfällen kann es umgekehrt sein. In beiden Fällen weisen die Feldlinien jedoch im weiter radial außen gelegenen Element - also im Regelfall im Stator - einen tangential gerichteten Verlauf auf.

Bei einer Axialflussmaschine können alternativ ein Luftspalt oder zwei Luftspalte vorhanden sein. Die Luftspalte erstrecken sich in Radialrichtung. Im Falle eines einzigen Luftspalts sind die Feldlinien des Magnetfeldes in einem ersten Tangentialbereich des Luftspalts vom Stator zum Rotor gerichtet. In einem zweiten Tangentialbereich des Luftspalts sind die Feldlinien vom Rotor zum Stator gerichtet. Innerhalb des Rotors und innerhalb des Stators verlaufen die Feldlinien tangential.

Im Falle zweier Luftspalte sind die Luftspalte axial voneinander beabstandet. Die Feldlinien sind in einem ersten Tangentialbereich des ersten Luftspalts vom Stator zum Rotor gerichtet. In einem zweiten Tangentialbereich des ersten Luftspalts sind die Feldlinien vom Rotor zum Stator gerichtet. Innerhalb des Rotors verlaufen die Feldlinien axial. Die Feldlinien sind daher im ersten Tangentialbereich des zweiten Luftspaltes vom Rotor zum Stator gerichtet und im zweiten Tangentialbereich des zweiten Luftspalts vom Stator zum Rotor gerichtet. Im Stator werden die Feldlinien in die Tangentialrichtung umgelenkt.

Bei einer Transversalflussmaschine sind zwei Luftspalte vorhanden. Die Feldlinien sind im Wesentlichen spiralförmig ausgebildet, wobei die "Achse", um welche die Spirallinien umlaufen, sich in Tangentialrichtung erstreckt. Die Feldlinien weisen daher eine Tangentialkomponente auf.

Die Aufgabe der vorliegenden Erfindung besteht darin, Möglichkeiten zu schaffen, mittels derer die Leistungsdichte und insbesondere das Leistungsgewicht der elektrischen Maschine optimiert werden können.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 10. Anspruch 11 nennt eine bevorzugte Anwendung der erfindungsgemäßen elektrischen Maschine.

Erfindungsgemäß ist vorgesehen, eine elektrische Maschine der eingangs genannten Art dadurch auszugestalten, dass die Feldlinien innerhalb des Stators und innerhalb des Rotors axial und radial zur Rotationsachse, aber nicht tangential um die Rotationsachse herum vom ersten Luftspalt zu den zweiten Luftspalten und umgekehrt verlaufen.

Durch die erfindungsgemäße Ausgestaltung der elektrischen Maschine kann das von dem Wicklungssystem generierte Magnetfeld sowohl im ersten Luftspalt als auch in den zweiten Luftspalten und damit zweimal zur Generierung einer elektromotorischen Kraft genutzt werden.

Es ist möglich, dass die Anzahl an zweiten Luftspalten eins beträgt. In diesem Fall sind vorzugsweise der erste und der zweite Luftspalt durch Spiegelung an einer orthogonal zur Rotationsachse verlaufenden Spiegelebene ineinander abbildbar.

Der erste Luftspalt kann sich alternativ in Axialrichtung erstrecken oder in Form der Mantelfläche eines Kegelstumpfs ausgebildet sein. Der zweite Luftspalt ist aufgrund der Abbildbarkeit des ersten und des zweiten Luftspalts ineinander auf die gleiche Weise ausgebildet wie der erste Luftspalt.

Alternativ ist es möglich, dass die Anzahl an zweiten Luftspalten zwei beträgt. In diesem Fall gabeln axial in Richtung der Rotationsachse gesehen die zweiten Luftspalte den ersten Luftspalt ein.

Die zweiten Luftspalte sind vorzugsweise durch Spiegelung an einer orthogonal zur Rotationsachse verlaufenden Spiegelebene ineinander abbildbar. Der erste Luftspalt ist weiterhin vorzugsweise durch Spiegelung an derselben Spiegelebene in sich selbst abbildbar.

Es ist möglich, dass der erste Luftspalt sich in Axialrichtung erstreckt.

In einer bevorzugten Ausgestaltung erstrecken sich die zweiten Luftspalte in Radialrichtung und grenzen an den ersten Luftspalt an. Alternativ können die zweiten Luftspalte sich in Axialrichtung erstrecken und vom ersten Luftspalt beabstandet sein.

Der Stator besteht aus Statorblechen. Vorzugsweise erstrecken die Statorbleche sich jeweils in Axial- und Radialrichtung. Sie sind also in Tangentialrichtung aufeinander gestapelt. Durch diese Ausgestaltung werden insbesondere Wirbelstromverluste minimiert.

In analoger Weise kann auch der Rotor aus Rotorblechen bestehen. Die Rotorbleche können sich ebenfalls jeweils in Axial- und Radialrichtung erstrecken, so dass sie in Tangentialrichtung aufeinander gestapelt sind.

Das Wicklungssystem ist vorzugsweise als maximal niederpoliges Wicklungssystem ausgebildet. Insbesondere eine zweipolige Ausgestaltung ist bevorzugt. Es sind aber auch vierpolige und in Einzelfällen sechspolige Ausgestaltungen möglich. Die Niederpoligkeit ist vorzuziehen, weil Ummagnetisierungsverluste mit der Polzahl ansteigen.

Aufgrund des hohen erzielbaren Leistungsgewichts (d. h. des Verhältnisses von erzielbarer Leistungsausbeute bei gegebenem Gewicht) der erfindungsgemäßen elektrischen Maschine ist bevorzugt, sie als Antrieb für ein Luftfahrzeug - beispielsweise für ein Flugzeug oder einen Helikopter - zu verwenden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung
- FIG 1: eine elektrische Maschine,
- FIG 2: einen Querschnitt durch eine erfindungsgemäße elektrische Maschine,
- FIG 3: einen Längsschnitt durch die elektrische Maschine von FIG 2,
- FIG 4: einen Längsschnitt durch eine weitere elektrische Maschine,
- FIG 5: ein Wicklungssystem der elektrischen Maschine von FIG 4 in abgerollter Darstellung,
- FIG 6: einen Längsschnitt durch eine weitere elektrische Maschine,
- FIG 7: einen Längsschnitt durch eine weitere elektrische Maschine,
- FIG 8: ein Wicklungssystem der elektrischen Maschine von FIG 7 in abgerollter Darstellung,
- FIG 9: einen Längsschnitt durch eine weitere elektrische Maschine,
- FIG 10: einen Ausschnitt eines Querschnitts durch einen Stator und einen Rotor und
- FIG 11: ein Luftfahrzeug.

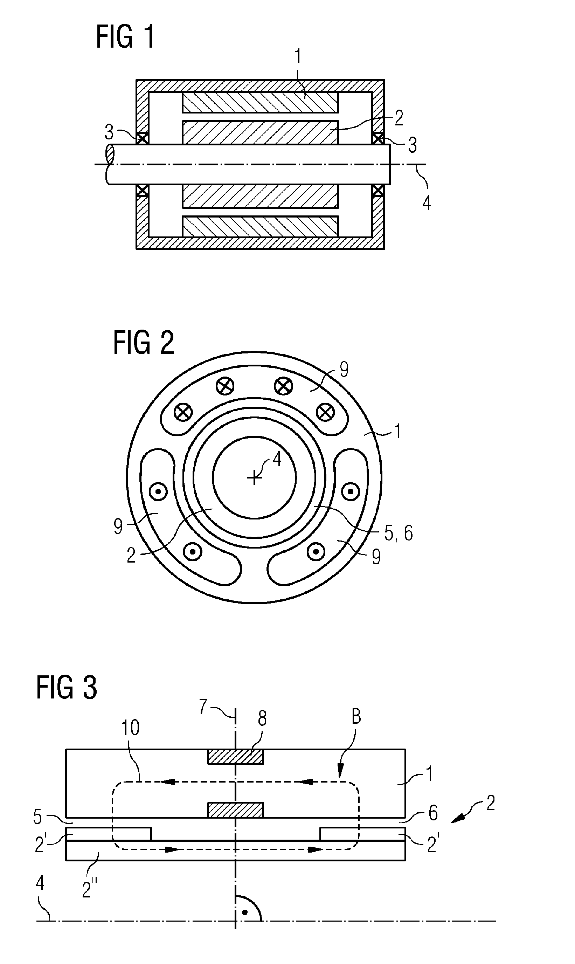

Gemäß FIG 1 weist eine elektrische Maschine einen Stator 1 und einen Rotor 2 auf. Der Rotor 2 ist in Lagern 3 gelagert, so dass er um eine Rotationsachse 4 rotierbar ist.

Die Rotationsachse 4 definiert ein zylindrisches Koordinatensystem mit einer Axialrichtung, einer Radialrichtung und einer Tangentialrichtung. Die Axialrichtung ist diejenige Richtung, die parallel zur Rotationsachse 4 verläuft. Die Radialrichtung ist diejenige Richtung, die orthogonal zur Rotationsachse 4 auf die Rotationsachse 4 zu bzw. von ihr weg gerichtet ist. Die Tangentialrichtung ist diejenige Richtung, die sowohl zur Axialrichtung als auch zur Radialrichtung orthogonal verläuft. Die Tangentialrichtung verläuft also in konstantem radialem Abstand und bei konstanter axialer Positionierung kreisförmig um die Rotationsachse 4 um.

Die elektrische Maschine ist in FIG 1 nur in groben Zügen dargestellt. Für die Erläuterung der weiteren, erfindungsgemäßen Ausgestaltung der elektrischen Maschine wird auf die FIG 2 und 3 Bezug genommen.

Gemäß den FIG 2 und 3 wirken der Stator 1 und der Rotor 2 elektromagnetisch aufeinander ein, und zwar über einen ersten Luftspalt 5 und eine Anzahl zweiter Luftspalte 6. Der erste Luftspalt 5 und die zweiten Luftspalte 6 erstrecken sich tangential um die Rotationsachse 4 herum.

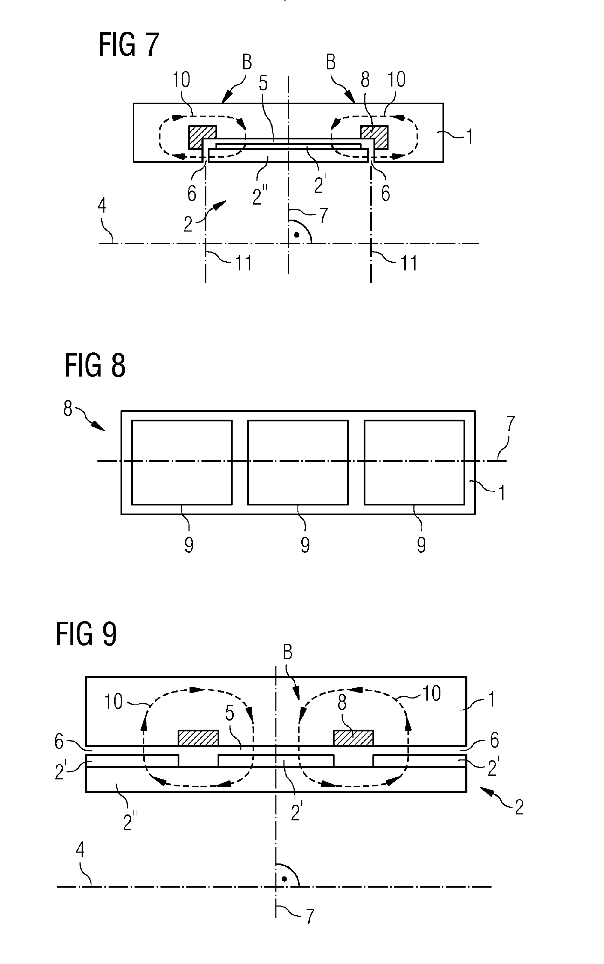

Bei der Ausgestaltung der FIG 2 und 3 ist nur ein einziger zweiter Luftspalt 6 vorhanden. Bei anderen Ausgestaltungen - dies wird später in Verbindung mit den FIG 7 bis 9 näher erläutert werden - können zwei zweite Luftspalte 6 vorhanden sein.

Der erste Luftspalt 5 und der - gemäß den FIG 2 und 3 einzige - zweite Luftspalt 6 sind durch Spiegelung an einer Spiegelebene 7 ineinander abbildbar. Die Spiegelebene 7 verläuft - siehe die FIG 1 und 3 - orthogonal zur Rotationsachse 4. Im Stator 1 ist ein Wicklungssystem 8 mit Spulen 9 angeordnet. Gemäß den FIG 2 und 3 ist das Wicklungssystem 8 in einer Radialebene angeordnet, d.h. in einer orthogonal zur Rotationsachse 4 verlaufenden Ebene. Es kann insbesondere in der Spiegelebene 7 angeordnet sein. Die Spulen 9 des Wicklungssystems 8 sind nierenförmig ausgebildet.

Im Rotor 2 ist ein Magnetfeldgenerator 2' angeordnet. Der Magnetfeldgenerator 2' ist auf einem Joch 2" des Rotors 2 angeordnet. Das Joch 2" bewirkt eine Führung des sogenannten magnetischen Rückschlusses.

Gemäß FIG 2 ist der Magnetfeldgenerator 2' als Permanentmagnet ausgebildet. Diese Ausgestaltung ist jedoch nicht zwingend. Es ist auch eine Ausgestaltung als Elektromagnet möglich. Auch andere Ausgestaltungen sind möglich.

Das Wicklungssystem 8 und der Magnetfeldgenerator 2' generieren zusammen ein resultierendes Magnetfeld B. Das resultierende Magnetfeld B bildet geschlossene Feldlinien aus. Eine der Feldlinien ist exemplarisch in FIG 3 eingezeichnet und mit dem Bezugszeichen 10 versehen.

FIG 3 zeigt den Verlauf der Feldlinie 10, der sich bei einem bestimmten Bestromungszustand des Wicklungssystems 8 und einer bestimmten Drehstellung des Rotors 2 einstellt. Gemäß FIG 3 ist die Feldlinie 10 - dies gilt auch für andere Feldlinien - im ersten Luftspalt 5 vom Stator 1 zum Rotor 2 gerichtet. Im zweiten Luftspalt 6 ist die Feldlinie 10 - auch dies gilt auch für die anderen Feldlinien - vom Rotor 2 zum Stator 1 gerichtet. Bei einer anderen Bestromung des Wicklungssystems 8 und/oder einer anderen Drehstellung des Rotors 2 können sich der Betrag des Magnetfeldes B und ggf. auch dessen Vorzeichen ändern. Der Verlauf der Feldlinie 10 als solcher - auch dies gilt auch für die anderen Feldlinien - bleibt hingegen unverändert.

Wie aus FIG 3 zu erkennen ist, verläuft die Feldlinie 10 somit axial und/oder radial zur Rotationsachse 4. Sie verläuft hingegen nicht tangential um die Rotationsachse 4 herum. Sie weist also keine Tangentialkomponente auf. Dies ist insbesondere aus FIG 2 erkennbar, weil hier die Feldlinien 10 entsprechend der üblichen Darstellungsweise nur als kleine Kreise mit Punkt oder Kreuz (je nach Richtung des Magnetfeldes B) dargestellt sind. Der magnetische Fluss ist also ausschließlich axial und/oder radial, nicht aber tangential gerichtet.

Die oben genannten Aussagen gelten sowohl für den Feldverlauf im Stator 1 als auch für den Feldverlauf im Rotor 2. Sie gelten auch für den Feldverlauf in den Luftspalten 5, 6 selbst.

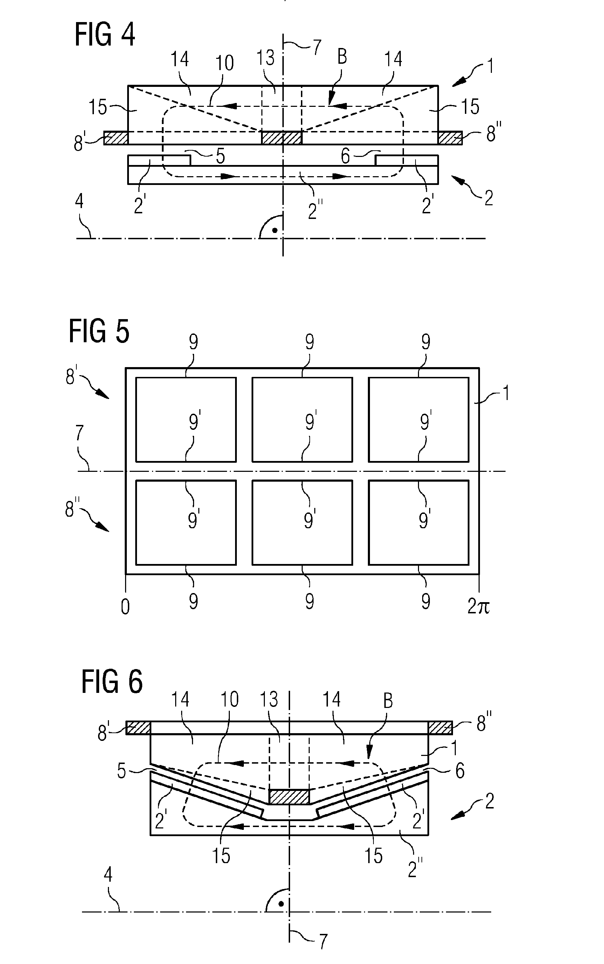

Die FIG 4 und 5 zeigen eine Modifikation der elektrischen Maschine der FIG 2 und 3. Die Modifikation besteht im Wesentlichen in der Anordnung des Wicklungssystems 8. Die übrigen, obenstehend in Verbindung mit den FIG 2 und 3 getroffenen Aussagen sind weiterhin gültig. Insbesondere bleibt der rein axial-radiale Verlauf der Feldlinien 10 erhalten.

Gemäß den FIG 4 und 5 weist das Wicklungssystem 8 in Axialrichtung gesehen zwei Teilwicklungssysteme 8ʹ, 8" auf. Spulen 9 der Teilwicklungssysteme 8ʹ, 8" sind derart bestromt, dass der Stromfluss in an das jeweils andere Teilwicklungssystem 8", 8' angrenzenden Abschnitten 9ʹ der Spulen 9 gleichgerichtet sind.

FIG 6 zeigt eine Modifikation des Wicklungssystems 8 der FIG 4 und 5. Gemäß FIG 6 weisen axial äußere Abschnitte 9" der Spulen 9 des Wicklungssystems 8 einen größeren radialen Abstand R von der Rotationsachse 4 auf als axial innere Abschnitte 9' des Wicklungssystems 8, welche einen kleineren radialen Abstand r von der Rotationsachse 4 aufweisen.

Bei den Ausgestaltungen der FIG 2 bis 5 erstreckt sich der erste Luftspalt 5 in Axialrichtung. Die Feldlinien 10 des Magnetfeldes B verlaufen im ersten Luftspalt 5 somit radial. Diese Ausgestaltung ist auch in Verbindung mit der Ausgestaltung des Wicklungssystems 8 gemäß FIG 6 möglich. Bevorzugt ist im Rahmen der Ausgestaltung von FIG 6 jedoch, dass der erste Luftspalt 5 in Form der Mantelfläche eines Kegelstumpfes ausgebildet ist. Diese Ausgestaltung ist insbesondere bei der Ausgestaltung des Wicklungssystems 8 entsprechend FIG 6 sinnvoll. Sie ist jedoch prinzipiell auch bei der Ausgestaltung des Wicklungssystems 8 gemäß den FIG 2 und 3 oder gemäß den FIG 4 und 5 möglich.

Die FIG 7 und 8 zeigen eine Modifikation der elektrischen Maschine der FIG 2 und 3. Die Modifikation besteht im Wesentlichen darin, dass zwei zweite Luftspalte 6 vorhanden sind. Daraus resultieren andere Veränderungen, die nachstehend näher erläutert werden. Das Grundprinzip der FIG 2 und 3, nämlich
- das Vorhandensein des Stators 1 und des Rotors 2,
- die Lagerung des Rotors 2, so dass der Rotor 2 um die Rotationsachse 4 drehbar ist,
- das Einwirken von Stator 1 und Rotor 2 aufeinander über den ersten Luftspalt 5 und die Anzahl an zweiten Luftspalten 6,
- die Erstreckung der Luftspalte 5, 6 tangential um die Rotationsachse 4 herum,
- das Vorhandensein des Wicklungssystems 8 im Stator 1,
- das Vorhandensein des Magnetfeldgenerators 2' im Rotor 2,
- die Generierung eines resultierenden Magnetfeldes B mittels des Wicklungssystems 8 und des Magnetfeldgenerators 2' sowie
- insbesondere die Ausbildung geschlossener Feldlinien 10 des Magnetfeldes B und deren Verlauf ausschließlich radial und/oder axial, also ohne Tangentialkomponente,
sind jedoch auch für die Ausgestaltung gemäß den FIG 7 und 8 gültig. Insbesondere zeigt FIG 7 für jeden zweiten Luftspalt 6 je eine entsprechende Feldlinie 10.

Die beiden zweiten Luftspalte 6 sind gemäß FIG 7 derart angeordnet, dass sie axial in Richtung der Rotationsachse 4 gesehen den ersten Luftspalt 5 eingabeln. Der erste Luftspalt 5 befindet sich also, in Richtung der Rotationsachse 4 gesehen, zwischen den beiden zweiten Luftspalten 6.

Vorzugsweise bleibt auch die symmetrische Ausgestaltung der elektrischen Maschine erhalten. In diesem Fall sind die zweiten Luftspalte 6 durch Spiegelung an der Spiegelebene 7 ineinander abbildbar. Weiterhin ist vorzugsweise zusätzlich der erste Luftspalt 5 durch Spiegelung an der Spiegelebene 7 in sich selbst abbildbar.

Der erste Luftspalt 5 erstreckt sich gemäß FIG 7 in Axialrichtung. Er bildet also die Mantelfläche eines Zylinders. Alternativ könnte der erste Luftspalt 5 in Axialrichtung gesehen eine - vorzugsweise konvexe - Wölbung aufweisen. Wiederum alternativ könnte der erste Luftspalt 5 zwei aneinander angrenzende Teilabschnitte aufweisen, von denen jeder die Form der Mantelfläche eines Kegelstumpfes aufweist.

Die zweiten Luftspalte 6 können auf verschiedene Art und Weise ausgebildet sein. Bei der Ausgestaltung der zweiten Luftspalte 6 gemäß den FIG 7 und 8 erstrecken die zweiten Luftspalte 6 sich in Radialrichtung. Sie bilden in einer jeweiligen orthogonal zur Rotationsachse 4 verlaufenden Luftspaltebene 11 also einen Kreisring. Die zweiten Luftspalte 6 grenzen bei der Ausgestaltung der FIG 7 und 8 an den ersten Luftspalt 5 an. In der Schnittdarstellung der FIG 7 ergibt sich somit für den ersten Luftspalt 5 und die zweiten Luftspalte 6 in ihrer Gesamtheit betrachtet eine U-förmige Kontur.

Das Wicklungssystem 8 weist bei der Ausgestaltung der FIG 7 und 8 - siehe insbesondere FIG 8 - mehrere Spulen 9 auf, die in Tangentialrichtung gesehen über den Umfang des Stators 1 verteilt angeordnet sind.

FIG 9 zeigt eine Modifikation der elektrischen Maschine der FIG 7 und 8. Die Modifikation besteht in der Ausgestaltung und Anordnung der zweiten Luftspalte 6. Gemäß FIG 9 erstrecken sich die zweiten Luftspalten 6 in Axialrichtung. Weiterhin sind sie vom ersten Luftspalt 5 beabstandet.

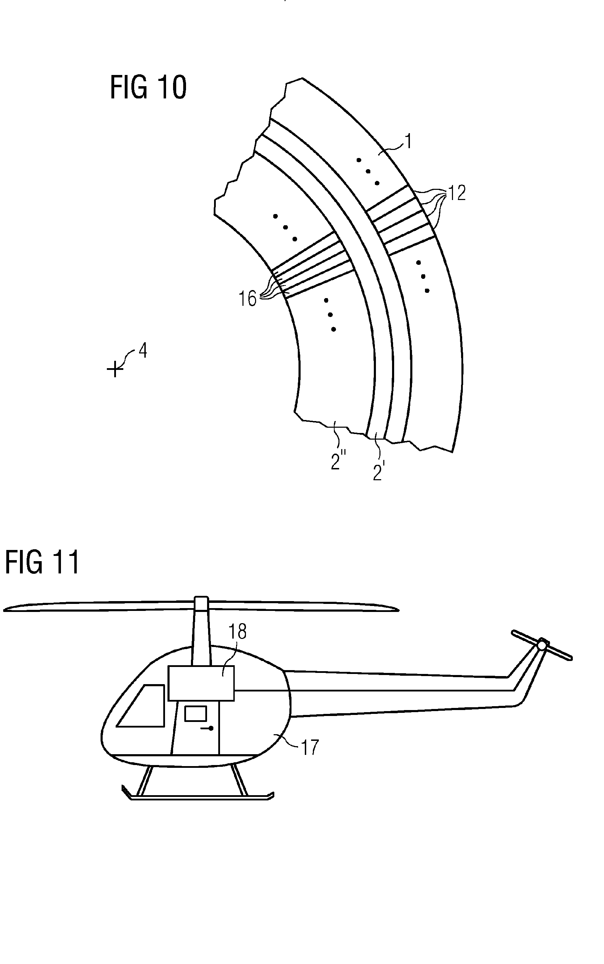

Der Stator einer elektrischen Maschine des Standes der Technik besteht in der Regel aus einem Stapel von Statorblechen, wobei die Stapelung in Richtung der Rotationsachse des Rotors der entsprechenden elektrischen Maschine erfolgt. Auch bei der erfindungsgemäßen elektrischen Maschine besteht der Stator 1 gemäß FIG 10 aus Statorblechen 12. Im Gegensatz zum Stand der Technik erstrecken sich die Statorbleche 12 jedoch jeweils in Axial- und Radialrichtung. Die Stapelung erfolgt bei dem Stator 1 der erfindungsgemäßen elektrischen Maschine also in Tangentialrichtung.

Es ist möglich, dass die Stapelung der Statorbleche 12 in Tangentialrichtung im gesamten Stator 1 erfolgt. Insbesondere bei der elektrischen Maschine der FIG 2 und 3 sowie bei den elektrischen Maschinen der FIG 7 bis 9 sollte dies der Fall sein. Bei der Ausgestaltung der elektrischen Maschine gemäß den FIG 4 bis 6 ist es hingegen ausreichend, wenn die Statorbleche 12 nur in einem in den FIG 4 und 6 mit dem Bezugszeichen 13 versehenen Zentralbereich des Stators 1 entsprechend gestapelt sind. Besser ist es, wenn zusätzlich zum Zentralbereich 13 auch in den FIG 4 und 6 mit dem Bezugszeichen 14 versehene Zwischenbereiche des Stators 1 entsprechend gestapelt sind. Optimal ist es, wenn zusätzlich zum Zentralbereich 13 und den Zwischenbereichen 14 auch in den FIG 4 und 6 mit dem Bezugszeichen 15 versehene Randbereiche des Stators 1 entsprechend gestapelt sind.

In analoger Weise besteht im Stand der Technik der Rotor oftmals aus Rotorblechen, die in Richtung der Rotationsachse aufeinander gestapelt sind. Auch bei der erfindungsgemäßen elektrischen Maschine kann der Rotor 2 aus Rotorblechen 16 bestehen. Im Gegensatz zum Stand der Technik erstrecken sich die Rotorbleche 16 jedoch jeweils in Axial- und Radialrichtung. Sie sind also - analog zu den Statorblechen 12 - in Tangentialrichtung gestapelt.

Bei den obenstehend in Verbindung mit den FIG 2 bis 9 erläuterten elektrischen Maschinen sind die Wicklungssysteme 8 als zweipolige Wicklungssysteme ausgebildet. Es ist ebenso möglich, die Wicklungssysteme 8 als vierpolige Wicklungssysteme oder als sechspolige Wicklungssysteme auszubilden. Auch noch größere Polzahlen sind prinzipiell möglich. Das Leistungsgewicht wird jedoch graduell immer schlechter, wenn die Polzahl vergrößert wird. Weiterhin erhöhen sich die Ummagnetisierungsverluste.

Die erfindungsgemäße elektrische Maschine ist prinzipiell universell einsetzbar. Aufgrund des hohen Leistungsgewichts bietet sich jedoch insbesondere an, die erfindungsgemäße elektrische Maschine entsprechend der Darstellung in FIG 11 als Antrieb 17 für ein Luftfahrzeug 18 zu verwenden. Die in FIG 11 dargestellte Ausgestaltung des Luftfahrzeugs 18 als Helikopter ist jedoch nur rein beispielhaft.

Die vorliegende Erfindung weist viele Vorteile auf. Insbesondere ist es möglich, eine relativ leichte und kompakte elektrische Maschine mit hoher Leistung zu betreiben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Stator (1) und einen Rotor (2) aufweist,
- wobei der Rotor (2) in Lagern (3) gelagert ist, so dass er um eine Rotationsachse (4) rotierbar ist,
- wobei der Stator (1) und der Rotor (2) über einen ersten Luftspalt (5) und eine Anzahl zweiter Luftspalte (6) elektromagnetisch aufeinander einwirken,
- wobei der erste Luftspalt (5) und die zweiten Luftspalte (6) sich tangential um die Rotationsachse (4) herum erstrecken,
- wobei im Stator (1) ein Wicklungssystem (8) angeordnet ist und im Rotor (2) ein Magnetfeldgenerator (2') angeordnet ist,
- wobei das Wicklungssystem (8) und der Magnetfeldgenerator (2') zusammen ein resultierendes Magnetfeld (B) generieren,
- wobei das resultierende Magnetfeld (B) geschlossene Feldlinien (10) ausbildet,
- wobei die Feldlinien (10) entweder im ersten Luftspalt (5) vom Stator (1) zum Rotor (2) und in den zweiten Luftspalten (6) vom Rotor (2) zum Stator (1) gerichtet sind oder umgekehrt im ersten Luftspalt (5) vom Rotor (2) zum Stator (1) und in den zweiten Luftspalten (6) vom Stator (1) zum Rotor (2) gerichtet sind,
- wobei die Feldlinien (10) innerhalb des Stators (1) und innerhalb des Rotors (2) axial und radial zur Rotationsachse (4), aber nicht tangential um die Rotationsachse (4) herum vom ersten Luftspalt (5) zu den zweiten Luftspalten (6) und umgekehrt verlaufen.

2. Elektrische Maschine nach Anspruch 1, **dadurch gekennzeichnet, dass** die Anzahl an zweiten Luftspalten (6) eins beträgt und dass der erste und der zweite Luftspalt (5,6) durch Spiegelung an einer orthogonal zur Rotationsachse (4) verlaufenden Spiegelebene (7) ineinander abbildbar sind.

3. Elektrische Maschine nach Anspruch 2, **dadurch gekennzeichnet, dass** der erste Luftspalt (5) sich in Axialrichtung erstreckt oder in Form der Mantelfläche eines Kegelstumpfs ausgebildet ist.

4. Elektrische Maschine nach Anspruch 1, **dadurch gekennzeichnet, dass** die Anzahl an zweiten Luftspalten (6) zwei beträgt und dass axial in Richtung der Rotationsachse (4) gesehen die zweiten Luftspalte (6) den ersten Luftspalt eingabeln.

5. Elektrische Maschine nach Anspruch 4, **dadurch gekennzeichnet, dass** der erste Luftspalt (5) sich in Axialrichtung erstreckt.

6. Elektrische Maschine nach Anspruch 4 oder 5, **dadurch gekennzeichnet, dass** die zweiten Luftspalte (6) sich in Radialrichtung erstrecken und an den ersten Luftspalt (5) angrenzen.

7. Elektrische Maschine nach Anspruch 4 oder 5, **dadurch gekennzeichnet, dass** die zweiten Luftspalte (6) sich in Axialrichtung erstrecken und vom ersten Luftspalt (5) beabstandet sind.

8. Elektrische Maschine nach einem der obigen Ansprüche, **dadurch gekennzeichnet, dass** der Stator (1) aus Statorblechen (12) besteht und dass die Statorbleche (12) sich jeweils in Axial- und Radialrichtung erstrecken.

9. Elektrische Maschine nach einem der obigen Ansprüche, **dadurch gekennzeichnet, dass** der Rotor (2) aus Rotorblechen (16) besteht und dass die Rotorbleche (16) sich jeweils in Axial- und Radialrichtung erstrecken.

10. Elektrische Maschine nach einem der obigen Ansprüche, **dadurch gekennzeichnet, dass** das Wicklungssystem (8) als maximal sechspoliges Wicklungssystem ausgebildet ist.

11. Elektrische Maschine nach einem der obigen Ansprüche, **dadurch gekennzeichnet, dass** sie als Antrieb (17) eines Luftfahrzeugs (18) verwendet wird.
